**Europäisches Patentamt**

**European Patent Office**

**Office européen des brevets**

(11) Veröffentlichungsnummer: **0 047 852**
**B1**

(12) # EUROPÄISCHE PATENTSCHRIFT

(45) Veröffentlichungstag der Patentschrift:
**18.10.89**

(51) Int. Cl.⁴: **A 01 B 79/00**, A 01 B 49/02,
A 01 B 33/16

(21) Anmeldenummer: **81106023.5**

(22) Anmeldetag: **31.07.81**

(54) Verfahren und Gerätekombination zur Bodenlockerung, zur Verbesserung der Krümelstruktur und zur Unkrautbekämpfung.

(30) Priorität: **12.09.80 DE 3034466**

(43) Veröffentlichungstag der Anmeldung:
**24.03.82 Patentblatt 82/12**

(45) Bekanntmachung des Hinweises auf die Patenterteilung:
**18.10.89 Patentblatt 89/42**

(84) Benannte Vertragsstaaten:
**AT BE CH DE FR GB IT LI NL SE**

(56) Entgegenhaltungen:
DE-A- 1 782 025
FR-A- 2 348 637
GB-A- 654 539
GB-A- 765 785
GB-A- 1 107 773
US-A- 1 396 037
US-A- 2 546 461
US-A- 3 601 202
US-A- 3 713 497

(73) Patentinhaber: **KUHN S.A., 4, Impasse des Fabriques,
F-67706 Saverne Cedex (FR)**

(72) Erfinder: **Welchel, Ernst, Bahnhofstrasse 1,
D-7326 Heiningen (DE)**

(74) Vertreter: **Seemann, Norbert W., Brehmstrasse 37,
D-7320 Göppingen (DE)**

**Beschreibung**

Die Erfindung bezieht sich auf ein Verfahren nach dem Oberbegriff des Anspruchs 1 sowie auf eine Gerätekombination zur Verfahrensdurchführung. Sie geht dabei von der immer wieder gemachten Erfahrung aus, dass alle bisherigen Fortschritte der Technik zur Bodenbearbeitung nichts daran geändert haben, daß viele — wenn nicht gar die meisten — Ackerböden entweder strukturgeschädigt sind oder einen unbefriedigenden Garezustand aufweisen. Vor allem die schweren Böden sind zunehmend entweder verdichtet oder sie neigen zur Verschlämmung, Verkrustung usw.

Deshalb nimmt auch die Wind- und Wassererosion in manchen Gegenden in erschreckendem Maße zu. Verdichtete und ungare Böden erfordern einen höheren Arbeits- und Treibstoffaufwand. Sie nutzen die zugeführten bzw. vorhandenen Nährstoffe so schlecht aus, daß vielen Feldern mit der Düngung ein Mehrfaches der Nährstoffe zugeführt werden muß, die mit der Ernte das Feld verlassen. Die steigenden Kosten für Treibstoffe, Handelsdünger und zumindest riskante Schädlingsbekämpfungsmittel erfordern daher dringend eine Verbesserung der Bodenbearbeitung.

Ein Verfahren gemäß dem Oberbegriff des Anspruches 1 ist aus beispielsweise der GB-A-1 107 773 und eine Gerätekombination gemäß dem Oberbegriff des Anspruches 8 ist aus der DE-A-2 617 865 bekannt.

Es ist in der Landwirtschaft seit langem bekannt, daß durch die sog. Dammkultur die Krümelstruktur und Bodengare auch schwerer, zur Staunässe neigender Ackerböden verbessert werden kann. Ein neuerdings bekannt gewordenes Verfahren und eine maschinelle Vorrichtung zur Erstellung solcher Dämme arbeiten dabei derart, daß in mehreren, zeitlich aufeinander folgenden Arbeitsgängen mittels einer Reihe sech- oder scharförmiger Werkzeuge eine Art Furchen in den Ackerboden gezogen und die Bodenteile aus diesen Furchen heraus und von jeweils zwei Seiten her zu immer größeren Dämmen zusammengefördert werden.

Diese «Dammkultur» erlaubt den gezielten und zum Teil unglaublich raschen Aufbau der natürlichen Bodengare dadurch, daß die stufenweise aufgebauten Dämme später wiederholt erhöht oder verlegt und die Furchen vertieft werden. Diese Methode hat aber den Nachteil, daß sie viel zuviele Arbeitsgänge und auch zuviel Zeit erfordert, bis die Dämme gebildet sind. Es entstehen also zu viele Fahrspuren und ein zu hoher Treibstoffverbrauch. Da es zu lange dauert, bis die Dämme gebildet sind, wird das Wetterrisiko vergrößert und die Vegetationsperiode zu schlecht ausgenützt. Außerdem kann mit den bekannten starren Werkzeugen oft nur eine ungenügende Zerkleinerung des aufgefurchten Bodens erreicht und der Boden unter den Dämmen nicht gelockert werden. Auch das Einebnen der Dämme kann bei ungünstigem Wetter zu einer ungleichmäßigen Bodenstruktur und damit zu einem schlechten Wachstum der Kulturen führen.

Hier knüpft nun die vorliegende Erfindung an mit der Aufgabe, ein Verfahren zu schaffen, das das rasche Anhäufeln der gesamten gekrümelten Oberschicht des Bodens zu Dämmen und die spätere Bodenlockerung auch unter den Dämmen erlaubt.

Gelöst wird diese Aufgabe in verblüffend einfacher Weise durch die in dem Anspruch 1 angegebenen Verfahrensschritte, sowie durch die in dem Anspruch 8 gekennzeichnete Gerätekombination zur Verfahrensdurchführung.

Besondere Ausführungsarten der Erfindung sind in den abhängigen Ansprüchen angegeben.

Das Stoppelfeld wird zunächst flach bearbeitet und dadurch gekrümelt, um das Ausfallgetreide und die Unkrautsamen zum Auflaufen anzuregen. Anschließend wird in einem ersten Arbeitsgang mit dem Lockerungsgerät gelockert und mit dem angekoppelten Häufelgerät die lose Erde zu Dämmen aufgehäufelt. Die Dämme werden dann später seitlich versetzt und/oder mit den Flügelscharen des Lockerungsgerätes unterfahren, sowie erneut bzw. höher angehäufelt. Die Furchen werden zugleich oder später separat mit Meißelscharen tiefer gelockert.

Das Häufelgerät kann auch schon beim ersten Arbeitsgang hinter der Krümelwalze angekoppelt werden, so daß das Feld in einem einzigen Arbeitsgang mit dem Lockerungsgerät flach oder mitteltief gelockert, mit der Krümelwalze zerkleinert und mit dem Häufelgerät auf Dämme gelegt werden kann. Dabei werden Strohreste zum Teil eingemischt, zum Teil beschatten sie als Bodenbedeckung die Dämme.

Nach dem Auflaufen weiterer Unkräuter wird im späteren oder frühen Herbst eine tiefere Lockerung mit dem Lockerungsgerät durchgeführt. Der Boden wird daher jeweils schonend gelockert und die lose Erde zu höheren Dämmen aufgehäufelt. Dies ist ein mehr als vollwertiger Ersatz für die Winterfurche. Das Feld kann ohne weiteres über Winter in Dämmen liegen bleiben, wenn es im Spätherbst nicht mit starren Werkzeugen grob eingeebnet werden kann. Es wird im Frühjahr eine viel bessere Bodengare aufweisen.

Wenn die Häufeldämme während der Vegetationsperiode – also nicht erst im Winter – angelegt werden, tritt erfahrungsgemäß eine erstaunlich rasche Verbesserung der Krümelstruktur und Bodengare ein, die zu entsprechend schönen, wüchsigen Beständen im folgenden Jahr führen wird.

Da die Bodengare erstaunlich verbessert wird, kann bei späteren Bearbeitungsmaßnahmen auf so vorbereiteten Feldern mit verhältnismäßig hoher Arbeitsgeschwindigkeit gefahren und ein ausgezeichnetes, gekrümeltes Saatbett aus Feinerde, kleinen und größeren Krümeln erzielt werden.

Die Dammkultur kann daher zur wiederbelebung vieler, insbesondere schwerer Ackerböden, zur schonenden Vertiefung des Wurzelraumes und zum Aufbau bzw. Erhaltung einer dauerhaften, lebendverbauten Krümelstruktur einen entscheidenden Beitrag leisten.

Zudem werden die Erträge beachtlich erhöht und andererseits wird der Aufwand an zugekauften Produktionsmitteln wie Treibstoff, Dünge- und Schädlingsbekämpfungsmittel entsprechend verringert.

Die Ursachen dieses erstaunlich schnellen Aufbaues der Bodengare in den Dämmen, der erheblich rascher vor sich geht als in eingeebneten Feldern, dürften z. B. in der Vergrößerung der Bodenoberfläche, in der besseren Durchlüftung, der höheren Temperatur und darin liegen, daß zumindest in den Dammkronen auch bei starken oder lang anhaltenden Niederschlägen keine stauende Nässe auftritt. Der Boden trocknet in den Furchen eher aus und kann daher tiefer gelockert und belüftet werden. Nach längeren Regenperioden oder über den Winter können die Bodenlebewesen in den Dämmen in größerer Zahl und Artenvielfalt überleben, so daß sich nach der Wiedererwärmung des Bodens die optimale Bodengare rasch einstellen wird. Die Bestellung im Frühjahr sollte hierbei natürlich in einem, höchstens aber in zwei Arbeitsgängen, d. h. so durchgeführt werden, daß keine schädlichen Fahrspuren entstehen.

Ein besonderer Vorteil dieser Methode ist außerdem darin zu sehen, daß sie auch mit verhältnismäßig leichten Schleppern durchgeführt werden kann, weil sie die schrittweise und damit problemlose Vertiefung der Ackerkrume auch auf schweren, verdichteten Böden – auch solchen mit Steinen – erlaubt:

Man kann bei jedem Arbeitsgang das Feld mit einer Arbeitsbreite, die mindestens der Gesamtbreite des Schleppers entspricht, lockern, die Oberschicht krümeln und in Häufeldämme legen. Nach zwei bis drei Wochen werden diese Häufeldämme mit dem Lockerungsgerät mit Flügelscharen unterfahren und durch das angekuppelte Häufelgerät erhöht. Die Schlepperräder laufen bei jeder folgenden Fahrt nicht im vorher gekrümelten und daher lockeren Boden, sondern in der abgetrockneten Furche; sie übertragen daher jeweils die volle Zugkraft.

Nach erfolgter Belebung des Bodens wird das Feld dann durch eine schwere Egge oder durch Teilung der Dämme eingeebnet und die Nachfrucht bestellt. Beim Einebnen der Dämme ist darauf zu achten, daß der feuchte, innere Dammkern auch in die trockenen Furchen eingebracht, also gleichmäßig auf der Fläche verteilt wird.

Die Vorteile des neuen Verfahrens bestehen also einerseits in einer Beschleunigung und Verbesserung der Krümelstruktur und Bodengare, andererseits in einer Verringerung des Gesamtaufwandes für die Bodenbearbeitung und drittens darin, daß schwere Böden auch mit verhältnismäßig leichten Schleppern – in mehreren, in zeitlichen Abständen durchgeführten Arbeitsgängen – schrittweise von oben nach unten auf Pflugtiefe und tiefer gelockert werden können, ohne daß verdichtete Fahrspuren verbleiben oder die Zugleistung des Schleppers, so wie bisher im gelockerten Boden, beeinträchtigt wird. Die übertragbare Zugleistung wird sogar größer, weil die Räder bei jedem Arbeitsgang in der Furche zwischen zwei Dämmen laufen.

Damit wird durch die vorliegende Erfindung auch das bisherige Vorurteil bzw. der Einwand ausgeräumt, man könne nach einer flachen Bodenkrümelung zwar tief pflügen, nicht aber den Boden von oben nach unten in mehreren Arbeitsgängen stufenweise auf größere Tiefe lockern, weil die Schlepperräder in der lockeren Erde keinen Halt finden. Beim Verfahren gemäß der Erfindung laufen die Schlepperräder jeweils in den abgetrockneten Furchen und können somit die volle Zugkraft übertragen. Weitere Einzelheiten sind aus den Zeichnungen und deren Beschreibung zu entnehmen.

Die Zeichnungen stellen, weitestgehend schematisch, folgendes dar:

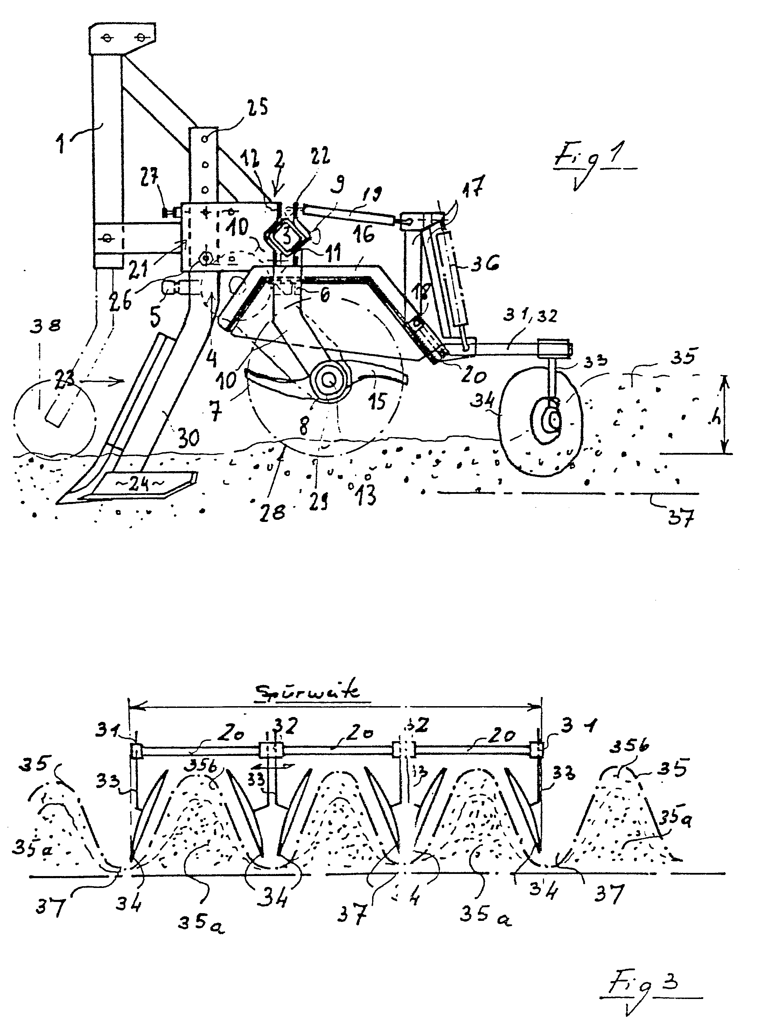

Fig. 1 die Seitenansicht einer der Verfahrensdurchführung angepaßten Gerätekombination,

Fig. 2 eine perspektivische Darstellung zu Fig. 1 und

Fig. 3 eine Querschnittsdarstellung eines entsprechend bearbeiteten Ackerbodens,

Fig. 4 ein Schar zum Einebnen der Dämme in Seitenansicht sowie

Fig. 5 eine Draufsicht zu Fig. 4.

Ein an sich bekannter Dreipunktbock 1 zum Anschluß der Gerätekombination an den nicht näher dargestellten Kraftheber üblicher Traktoren ist mittels Schrauben und angedeuteter Rohrschellen 2 am Tragrohr 3 eines Geräterahmens befestigt. An diesem Tragrohr 3 ist das Gehäuse 7 eines entsprechenden Getriebes 4 mittels Befestigungsbügeln und Schrauben 9 lösbar befestigt. Das Getriebe 4 ist in an sich bekannter Weise mit einer vorderen und hinteren Zapfwelle 5 und 6 sowie einer Abtriebswelle 8 versehen, die als im Gehäuse 7 gelagerte, mit Sechskant- oder Keilwellenprofil versehene Hohlwelle ausgebildet sein kann.

Am Tragrohr 3 sind ferner eine oder mehrere Lagerkonsolen 10 mit Befestigungsbügeln 11 und Befestigungsschrauben 12 so angebracht, daß die Außenlager 29 der Lagerkonsolen 10 zur Abtriebswelle 8 des Getriebes 4 fluchten, so daß die Zinkenwelle 13 sowohl mit einem Ende in die hohle Abtriebswelle 8 als auch mit einem anderen Ende in das Außenlager 29 gesteckt werden kann, nachdem auf der Zinkenwelle 13 mit dieser in bekannter Weise drehfest verbundene Zinken 15 mit oder ohne Distanzstücken aufgeschoben wurden.

Im Tragrohr 3 ist zudem eine oberhalb der Zinkenwelle 13 befindliche Abdeckhaube 16 starr angebracht, an deren hinterem unteren Bereich ein weiterer Anbaubock 17 in einem Gelenk 18 um eine horizontale und quer zur Fahrtrichtung angeordnete Achse schwenkbar befestigt ist.

Dieser Bock 17 kann dabei über eine verstellbare Stange 19 mit dem Tragrohr 3 so verbunden sein, daß er begrenzt verstellbar bzw. in seiner Winkelstellung bzw. Höhenlage zum Erdboden einstellbar ist.

Am Tragrohr 3 sind, in Fahrtrichtung gesehen, nach vorne ragend, Stecktaschen 21 mit Bohrungen für Schrauben 26 mittels Befestigungsbügeln und Schrauben für die Scharstiele 30 von mit bekannten flügelförmigen Lockerungsscharen 24 ausgerüsteten Lockerungskörpern 23 befestigt. Diese Scharstiele 30 sind mit verschiedenen, im Abstand voneinander angebrachten Bohrungen 25 versehen, durch welche die Scharstiele 30 mit in den Stecktaschen 21 angebrachten Schrauben 26 in einstellbarer Höhe zum Erdboden bzw. zur Zinkenwelle13 befestigt werden können.

An der Stirnwand der Stecktaschen 21 angebrachte Stellschrauben 27 ermöglichen die Einstellung des Anstellwinkels der Scharstiele 30 bzw. der Lockerungsschare 24 zum Erdboden und damit die Anpassung dieses Winkels an durch Verlängerung oder Verkürzung des Oberlenkers am Dreipunktbock eingestellte unterschiedliche Höhenlagen der Krümelwalze 28 zum Erdboden.

Der Anbaubock 17 weist zudem einen Querträger 20 o. dgl. auf von dem aus sich Haltestiele 31, 32 weitestgehend horizontal nach hinten erstrekken, an denen über Arme 33 die Häufelscheiben 34 zum Formen der Dämme 35 angeschlossen sind. Mittels Belastungsfedern, Hydrostellzylindern 36 o. ä. kann zudem der Scheibentiefgang einzeln oder gemeinsam reguliert werden.

Um in einfacher Weise nun wieder ein Einebnen der Dämme zu erzielen, können entweder die Stiele 31, 32 horizontal verschieblich auf dem Querträger 20 sitzen oder aber letzterer in eine seitlich versetzte Lage zum Anbaubock 17 gebracht werden; hierbei ist es durchaus möglich, durch zusätzliche Stiele 33 mit Scheiben 34 weitere Doppelscheibenpaare an den Enden des Trägers 20 vorübergehend zu schaffen.

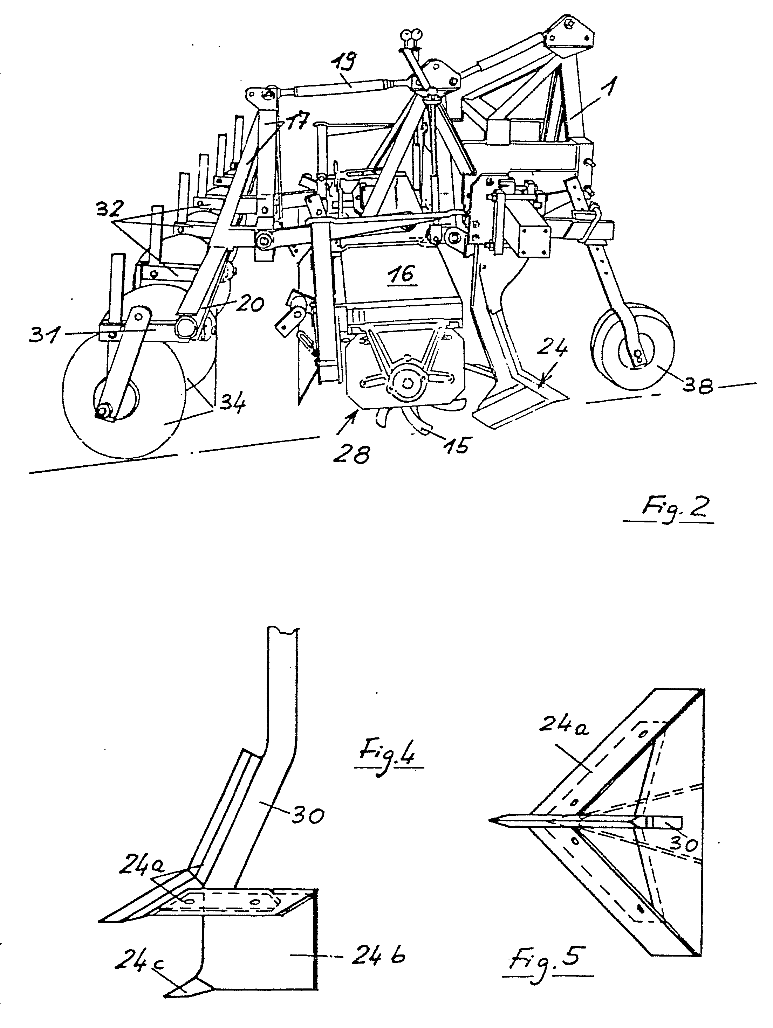

Wichtig bei diesem Einebnen ist es aber, daß der innere, feuchte Kern 35a der Dämme 35 so in der Ebene verteilt wird, daß diese Erde in möglichst gleicher Schichtstärke oder Mischung mit der trockeren Dammaußenfläche 35b auch in den Furchen 37 zu liegen kommt. Hierzu besonders geeignet sind beispielsweise Doppelschare, bei denen der obere Teil 24a der Lockerungsschare den trockenen Dammbereich anhebt und nach hinten und seitlich verteilt, während der über den Steg 24b angeschlossene, tiefere Scharteil 24c zuvor das Eingleiten des feuchten Bodens aus dem Dammkern 35a in die Furchen 37 bewirkt; eine hierzu geeignete Vorrichtung ist in den Fig. 4 und 5 angedeutet. Unabhängig hiervon sind aber auch jene Methoden zur Abtragung von Dämmen anwendbar, die bereits hinreichend aus der Technologie der Bearbeitung von Hopfenfeldern bekannt sind.

Wenn die Häufeldämme auch auf schwerem Boden über Winter stehen bleiben sollen, müssen die Furchen zwischen den Dämmen beim letzten Arbeitsgang so tief wie möglich gelockert werden, damit sich über Winter in der Furche kein Wasser ansammeln kann. Das spätere Einebnen der Dämme sollte im Frühjahr bei nicht zu feuchtem Boden mit einem rotierenden Gerät, z. B. einer Rotoregge oder einer Ackerfräse oder einer Kreiselegge mit jeweils geringster Drehzahl der Arbeitswerkzeuge durchgeführt werden. Damit wird der beim Einebnen mit einer Zinken- oder Kultiegge entstehende Nachteil beseitigt, daß zuviel lose und trockene Erde in die Furchen geschoben, d. h. keine günstigen Keim- und Wachstumsbedingungen für die nachfolgende Saat geschaffen werden und damit ungleichmäßige Bestände entstehen. Wenn die Dämme mit rotierenden Werkzeugen eingeebnet werden, wird die trockene und die feuchtere Erde besser gemischt. In vielen Fällen kann im selben Arbeitsgang gesät werden.

Die gesamte Gerätekombination kann in bekannter Weise freitragend an der Dreipunkthydraulik einer Zugmaschine anhängbar sein, oder zusätzlich über Stützräder 38 in geeigneter Weise abgestützt werden.

**Patentansprüche**

1. Verfahren zur Bodenbearbeitung mittels dessen der Boden zu parallel nebeneinander verlaufenden Dämmen angehäufelt wird, dadurch gekennzeichnet, daß
– in einem ersten Verfahrensschritt der Boden gelockert und die Dämme gebildet werden mit vorhergehendem, oder gleichzeitigem Krümeln des Ackerbodens, und
– in mindestens einem weiteren Verfahrensschritt, der dem ersten mit zeitlichem Abstand folgt, die Dämme ohne zusätzliche mechanische Bodenzerkleinerung unterschnitten und erneut angehäufelt werden.

2. Verfahren nach Anspruch 1, dadurch gekennzeichnet, daß die beim zweiten und etwaigen folgenden Verfahrensschritten angelegten Dämme eine geringere Zahl, dafür jedoch größere Abmessungen aufweisen, als beim ersten Verfahrensschritt.

3. Verfahren nach mindestens einem der Ansprüche 1 oder 2, dadurch gekennzeichnet, daß das Unterschneiden der bereits angelegten Dämme beim zweiten und den folgenden Schritten in größerer Arbeitstiefe erfolgt.

4. Verfahren nach mindestens einem der vorhergehenden Ansprüche, dadurch gekennzeichnet, daß beim zweiten und den folgenden Verfahrensschritten wenigstens zwei der zwischen den Dämmen befindlichen Furchen jeweils in der Schlepperspur liegen.

5. Verfahren nach mindestens einem der vorhergehenden Ansprüche, dadurch gekennzeichnet, daß das Unterfahren der im ersten Verfahrensschritt angelegten Dämme durch Flügelschare erfolgt, die an in den Furchen verlaufenden Haltestielen befestigt sind und sich jeweils bis wenigstens annähernd zur Mitte unterhalb des Dammes erstrecken.

6. Verfahren nach einem der vorhergehenden Ansprüche, dadurch gekennzeichnet, daß die Furchen im letzten Arbeitsgang tiefer gelockert werden als der Boden unter den Dämmen.

7. Verfahren nach Anspruch 6, dadurch gekennzeichnet, daß die Dämme über Winter erhalten bleiben und im Frühjahr durch rotierende Werkzeuge so eingeebnet werden, daß trockene und feuchte Bodenteile vermischt werden.

8. Gerätekombination zur Durchführung des Verfahrens nach mindestens einem der vorhergehenden Ansprüche, gekennzeichnet durch Verwendung eines Lockerungsgerätes mit flügelförmigen Lockerungsscharen in Kombination mit einem unmittelbar hinter dem Lockerungsgerät angeordneten, und mit diesem lösbar verbundenen mit Häufelorgane bestückten Häufelgerät.

9. Gerätekombination nach Anspruch 8, dadurch gekennzeichnet, daß die Häufelorgane des Häufelgerätes als an sich bekannte Häufelscheiben ausgebildet sind.

10. Gerätekombination nach Anspruch 8, dadurch gekennzeichnet, daß die Häufelorgane des Häufelgerätes als an sich bekannte Häufelkörper ausgebildet sind, die starre Leitbleche aufweisen.

11. Gerätekombination nach mindestens einem der Ansprüche 8 bis 10, dadurch gekennzeichnet, daß die Häufelorgane an einem Tragrohr in etwa vertikaler Ebene pendelnd aufgehängt und durch eine am Tragrohr abgestützte, einstellbare Druckfeder o. dgl. jeweils einzeln belastbar sind.

12. Gerätekombination nach mindestens einem der Ansprüche 8 bis 11, dadurch gekennzeichnet, daß die am Tragrohr des Häufelgerätes angeordneten Häufelorgane um wenigstens die halbe Arbeitsbreite seitlich verschiebbar am Rahmen befestigt sind.

13. Gerätekombination nach mindestens einem der Ansprüche 8 bis 12, dadurch gekennzeichnet, daß das Häufelgerät lösbar an dem Lockerungsgerät sitzt und in zwei gegeneinander seitlich versetzten Stellungen ankuppelbar ist.

14. Gerätekombination nach mindestens einem der Ansprüche 8 bis 13, dadurch gekennzeichnet, daß von den am Tragrohr des Häufelgerätes befestigten Häufelorganen wenigstens eines leicht lösbar oder hochklappbar angeordnet ist.

15. Gerätekombination nach wenigstens einem der Ansprüche 8 bis 14, dadurch gekennzeichnet, daß das Häufelgerät beim seitlichen Versetzen oder Einebnen der Dämme mit einer um wenigstens zwei Stück vergrößerten Anzahl von Häufelorganen ausgestattet ist, als beim ersten Anlegen der Dämme.

16. Gerätekombination nach Anspruch 15, dadurch gekennzeichnet, daß beim seitlichen Versetzen oder Einebnen der Dämme zumindest in den Reifenspuren ein tiefreichendes Meisselschar angeordnet ist.

17. Gerätekombination nach mindestens einem der Ansprüche 8 bis 16, dadurch gekennzeichnet, daß hinter den Häufelorganen an sich bekannte Arbeitswerkzeuge zum Einebnen des Erdbodens und/oder zum Drillen angeordnet sind.

18. Gerätekombination nach mindestens einem der Ansprüche 8 bis 17, dadurch gekennzeichnet, daß das Häufelgerät in an sich bekannter Weise mittels eines Dreipunktgestänges höhenverstellbar am Lockerungsgerät angelenkt und durch an diesem abgestützte Federn, Hydraulikzylinder o. ä. mit verstellbaren Druckkräften belastbar ist.

19. Gerätekombination nach mindestens einem der Ansprüche 8 bis 18, dadurch gekennzeichnet, daß die Haltestiele mit den an ihrem unteren Ende befestigten Flügelscharen in an sich bekannter Weise an einer angetriebenen Kurbelwelle gelagert, durch Lenker an einem Rahmen abgestützt sind, so daß sich ihre Schare auf einer ellipsenförmigen Kurvenbahn bewegen.

20. Gerätekombination nach mindestens einem der Ansprüche 8 bis 19, dadurch gekennzeichnet, daß zum gleichzeitigen Krümeln des Ackerbodens eine Krümelwalze verwendet wird, die sich zwischen den Lockerungsscharen und dem Häufelgerät erstreckt.

## Claims

1. Method for working the soil in order to form ridges which extend parallel one near the other, characterized by the fact that:
- during a first stage, the soil is loosened and the ridges are formed, the soil having been previously or being simultaneously crumbled, and
- during at least one further stage, which timely follows said first stage, the ridges are undercut and newly formed without further mechanical crumbling.

2. Method as in Claim 1, characterized by the fact that the number of ridges formed during said second stage or any further stage is less than the number of ridges formed during said first stage, the dimensions of said second or further ridges being however greater.

3. Method as at least in Claim 1 or 2, characterized by the fact that the undercutting of the previously formed ridges is made at a greater working depth during said second stage and any further stage.

4. Method as at least in any one of the preceding Claims, characterized by the fact that during said second stage and any further stage, at least two furrows which are found between said ridges, are merged with the tracks of the tractor wheels.

5. Method as at least in any one of the preceding Claims, characterized by the fact that the undercutting of the ridges formed during the first stage is made with wingshares, said wingshares being fastened to arms which travel in the furrows, and extending each at least approximately till the middle under said ridges.

6. Method as in any one of the preceding Claims, characterized by the fact that during the last stage, the furrows are loosened deeper as the soil located under the ridges.

7. Method as in Claim 6, characterized by the fact that the ridges are conserved during wintertime and in the Spring are leveled by means of rotating tools, in such a manner that dry soil and wet soil are mixed.

8. Combination of apparatuses for performing the method as at least in any one of the preceding Claims, characterized by the utilization of a loosening apparatus with wingshares in combination with a ridging apparatus which is directly arranged behind the loosening apparatus and fastened in a removable manner to the loosening apparatus, and which comprises ridging tools.

9. Combination of apparatuses as in Claim 8, characterized by the fact that the ridging tools of the ridging apparatus are formed, in a known manner, by ridging discs.

10. Combination of apparatuses as in Claim 8, characterized by the fact that the ridging tools of the ridging apparatus are formed, in a known manner, by ridging bodies which comprise rigid guiding sheets.

11. Combination of apparatuses as at least in any one of Claims 8 to 10, characterized by the fact that the ridging tools are connected to a tubular support so as to be able to pivot in an at least approximately vertical plane, and are each individually loadable by means of an adjustable compression spring or similar, which rests against the tubular support.

12. Combination of apparatuses as at least in any one of Claims 8 to 11, characterized by the fact that the ridging tools are connected to the tubular support of the ridging apparatus in such a manner that they can be laterally shifted at least half the working width.

13. Combination of apparatuses as at least in any one of Claims 8 to 12, characterized by the fact that the ridging apparatus is fixed in a removable manner to the loosening apparatus and is fixable in two laterally staggered positions.

14. Combination of apparatuses as at least in any one of Claims 8 to 13, characterized by the fact that at least one of the ridging tools fixed to the tubular support of the ridging apparatus is easily dismountable or is fixed so as to be pivoted upwardly.

15. Combination of apparatuses as at least in any one of Claims 8 to 14, characterized by the fact that during the laterally shift or levelling of the ridges, the ridging apparatus is provided with at least two more ridging tools as during the first forming of the ridges.

16. Combination of apparatuses as in Claim 15, characterized by the fact that during the laterally shift or levelling of the ridges, a chiselshare is arranged at least in the tracks of the wheels.

17. Combination of apparatuses as at least in any one of Claims 8 to 16, characterized by the fact that behind the ridging tools are arranged known tools for levelling the soil and/or for sowing.

18. Combination of apparatuses as at least in any one of Claims 8 to 17, characterized by the fact that the ridging apparatus is connected to the loosening apparatus in an upwardly adjustable manner by means of a three point linkage and is loadable, in an adjustable manner, by means of springs, hydraulic jacks or similar, which rest against the three point linkage.

19. Combination of apparatuses as at least in any one of Claims 8 to 18, characterized by the fact that the arms and the wingshares fastened to their lower ends are guided in a known manner on a crankshaft and are linked to a frame so that their wingshares move on an elliptical curve.

20. Combination of apparatuses as at least in any one of Claims 8 to 19, characterized by the fact that for the simultaneously crumbling of the soil, there is provided a crumbling roller, which extends between the loosening shares and the ridging apparatus.

## Revendications

1. Procédé de travail du sol en vue de la formation de buttes s'étendant parallèlement l'une à côté de l'autre, caractérisé par le fait:
- qu'au cours d'une première phase, on ameublit le sol et on forme les buttes, le sol ayant été préalablement ou étant simultanément émietté; et
- qu'au cours d'au moins une phase supplémentaire qui est décalée dans le temps par rapport à la première phase, on coupe et on soulève légèrement le sol sous les buttes sans émiettement mécanique supplémentaire, et on reforme celles-ci.

2. Procédé selon la revendication 1, caractérisé par le fait que les buttes formées au cours de la seconde phase et, le cas échéant, des autres phases suivantes, sont moins nombreuses, mais, en conséquence, de dimensions plus importantes que celles qui sont formées au cours de la première phase.

3. Procédé selon l'une au moins des revendications 1 ou 2, caractérisé par le fait qu'au cours de la seconde phase et le cas échéant, des autres phases suivantes, le coupage et le léger soulèvement du sol sous les buttes déjà formées, sont réalisés à une profondeur plus importante.

4. Procédé selon l'une au moins des revendications précédentes, caractérisé par le fait qu'au cours de la seconde phase et, le cas échéant, des autres phases suivantes, au moins deux des sillons se trouvant entre les buttes, s'étendent dans la trace des roues du tracteur.

5. Procédé selon l'une au moins des revendications précédentes, caractérisé par le fait que le coupage et le léger soulèvement du sol sous les buttes formées au cours de la première phase, sont réalisés au moyen de socs à ailerons qui sont fixés à des bras de soc se déplaçant dans les sillons et qui s'étendent chacun jusqu'au moins sensiblement sous le milieu des buttes.

6. Procédé selon l'une des revendications précédentes, caractérisé par le fait qu'au cours du dernier passage, les sillons sont ameublis à une profondeur plus importante que le sol sous les buttes.

7. Procédé selon la revendication 6, caractérisé par le fait que les buttes sont conservées durant l'hiver et qu'au printemps, elles sont étalées au moyen d'outils rotatif, de telle sorte que la terre sèche et la terre humide soient mélangées.

8. Combinaison d'appareils pour mettre en œuvre le procédé selon l'une des revendications précédentes, caractérisée par le fait qu'elle utilise un appareil d'ameublissement avec des socs à ailerons en combinaison avec un appareil à butter muni d'organes de buttage, qui s'étend directement derrière l'appareil d'ameublissement et qui est lié à ce dernier de manière amovible.

9. Combinaison d'appareils selon la revendication 8, caractérisée par le fait que les organes de buttage de l'appareil à butter sont réalisés sous forme de disques de buttage connus en soi.

10. Combinaison d'appareils selon la revendication 8, caractérisée par le fait que les organes de buttage de l'appareil à butter sont réalisés sous forme de corps de buttage, connus en soi, comportant des tôles de guidage rigides.

11. Combinaison d'appareils selon l'une au moins des revendications 8 à 10, caractérisée par le fait que les organes de buttage sont suspendus, de manière articulée dans un plan sensiblement vertical, à un tube porteur, et sont chacun chargés par un ressort de compression réglable, ou équivalent, en appui sur le tube porteur.

12. Combinaison d'appareils selon l'une au moins des revendications 8 à 11, caractérisée par le fait que les organes de buttage, agencés sur le tube porteur de l'appareil à butter, sont fixés au châssis de telle sorte qu'ils soient déplaçables latéralement au moins de la moitié de la largeur de travail.

13. Combinaison d'appareils selon l'une au moins des revendications 8 à 12, caractérisée par le fait que l'appareil à butter est fixé de manière amovible à l'appareil d'ameublissement et peut y être lié dans deux positions décalées latéralement l'une par rapport à l'autre.

14. Combinaison d'appareils selon l'une au moins des revendications 8 à 13, caractérisée par le fait que l'un au moins des organes de buttage liés au tube porteur de l'appareil à butter est agencé de manière facilement démontable ou pivotable vers le haut.

15. Combinaison d'appareils selon l'une au moins des revendications 8 à 14, caractérisée par le fait qu'au cours du déplacement latéral ou de l'étalement des buttes, l'appareil à butter est équipé d'au moins deux organes de buttage supplémentaires, qu'au cours de la première formation des buttes.

16. Combinaison d'appareils selon la revendication 15, caractérisée par le fait qu'au cours du déplacement latéral ou de l'étalement des buttes, il est agencé un soc à pointe au moins dans les traces des roues du tracteur.

17. Combinaison d'appareils selon l'une au moins des revendications 8 à 16, caractérisée par le fait que derrière les organes de buttage sont agencés des outils de nivelage du sol et/ou de semis connus en soi.

18. Combinaison d'appareils selon l'une au moins des revendications 8 à 17, caractérisée par le fait que l'appareil à butter est, d'une manière connue en soi, lié à l'appareil d'ameublissement de manière réglable en hauteur au moyen d'une structure à trois points et peut être chargé de manière réglable au moyen de ressorts, de vérins hydrauliques ou analogues s'appuyant sur ladite structure à trois points.

19. Combinaison d'appareils selon l'une au moins des revendications 8 à 18, caractérisée par le fait que les bras de soc avec les socs à ailerons fixés à leur extrémité inférieure sont, d'une manière connue en soi, guidés en rotation sur un vilebrequin entraîné et liés à un châssis au moyen de bielles, de telle sorte que leurs socs se déplacent sur une courbe en forme d'ellipse.

20. Combinaison d'appareils selon l'une au moins des revendications 8 à 19, caractérisée par le fait qu'un rouleau d'émiettement qui s'étend entre les socs d'ameublissement et l'appareil à butter, est utilisé pour l'émiettement simultané du sol.

EP 0 047 852 B1

Fig 1

Fig 3

Spurweite

9

Fig.2

Fig.4

Fig.5